# FASCICULE DE BREVET EUROPEEN

(11) **EP 2 706 209 B1**
(45) Date de publication et mention de la délivrance du brevet: **03.12.2014**
(21) Numéro de dépôt: 13306215.8
(22) Date de dépôt: 05.09.2013
(51) Int. Cl.: F02B 29/04, F02M 35/10

(54) **Procédé de fabrication d'un collecteur d'admission intégrant un échangeur de chaleur et collecteur correspondant**
Verfahren zur Herstellung eines Ansaugkrümmers mit integriertem Wärmetauscher und entsprechender Ansaugkrümmer
Method for producing an intake manifold integrating a heat exchanger and corresponding intake manifold

(30) Priorité: 06.09.2012 FR 1258336
(43) Date de publication de la demande: 12.03.2014
(73) Titulaire: Systèmes Moteurs (Société par Actions Simplifiée), 92300 Levallois-Perret (FR)
(72) Inventeur: Ancel, Benoît, 68420 EGUISHEIM (FR); Becker, Nicolas, 68000 COLMAR (FR)
(74) Mandataire: Nuss, Laurent

(56) Documents cités:
- EP-A1- 1 772 616
- EP-A2- 0 343 565
- WO-A1-2008/061850
- WO-A1-2009/027492
- WO-A1-2009/141711
- WO-A1-2010/146063
- WO-A1-2011/064087
- DE-A1-102005 017 971
- FR-A1- 2 645 209
- FR-A1- 2 908 833
- FR-A1- 2 936 572
- FR-A1- 2 946 397
- US-A- 4 474 162
- US-A1- 2011 088 663

## Description

La présente invention concerne le domaine des équipements techniques des véhicules automobiles à moteur à combustion interne, plus particulièrement les éléments et composants formant la ligne d'admission des gaz comburants de ces moteurs.

L'invention a, dans ce contexte, pour objet un procédé de fabrication d'un collecteur d'admission intégrant un échangeur de chaleur et un collecteur de ce type.

De très nombreuses réalisations de collecteurs d'admission sont connues dans l'état de la technique. Il en est de même pour les échangeurs de chaleur, en particulier ceux destinés à refroidir les gaz EGR avant leur mélange avec l'air frais, en vue de l'injection du mélange gazeux résultant dans les cylindres.

Une demande constante, voire une contrainte constructive permanente, dans le domaine de la fabrication automobile, est le gain de place en particulier sous le capot et dans l'environnement du moteur.

Dans le cadre de cette problématique générale, une tendance forte vise l'intégration de plusieurs fonctions complémentaires, associées et/ou consécutives dans un même module ou une même unité structurel(le).

Ainsi, il a été proposé de combiner les fonctions "collecteur d'admission" et "échangeur de chaleur" dans un même module et différentes solutions de réalisation de ce type de module unitaire et multifonctionnel ont déjà été divulguées.

Par les documents FR 2 645 209, WO 2008/061850 et US 2011/0088663, on connaît déjà des modules d'admission d'air comprenant un collecteur ou répartiteur incorporant un échangeur de chaleur.

Dans ces solutions antérieures connues, l'échangeur est introduit dans le corps creux du collecteur après réalisation de ce dernier. L'introduction s'effectue par une ouverture ménagée dans le corps creux du collecteur et qui est obturée de manière étanche après montage de l'échangeur.

Le couvercle peut être intégré à la structure de l'échangeur (FR 2 645 209 et US 2011/0088663) ou être une pièce séparée (WO 2008/061850).

Le document WO 2009/027492 divulgue une solution similaire à celle des trois documents précités, à savoir la réalisation du corps du collecteur avec une ouverture par l'introduction d'un échangeur, puis la mise en place dudit échangeur avec un couvercle obturant l'ouverture précitée et servant de support de montage à l'échangeur. Selon ce document, il peut, en outre, être prévu d'utiliser l'échangeur comme élément interne de renfort structurel pour le collecteur en le solidarisant avec la paroi opposée du corps de ce dernier, l'assemblage et le montage de l'échangeur s'effectuant par l'intermédiaire de vis.

Par les documents EP 0 343 565 et FR 2 936 572, on connaît des constructions de répartiteur d'admission ou similaire dans lesquelles l'échangeur est monté dans le boîtier d'un module en deux parties, avant assemblage (par vis) de ses deux parties constitutives. L'échangeur est maintenu en position dans le boîtier par blocage dans un emplacement de réception de forme complémentaire.

Par le document FR 2 908 833, on connaît un module unitaire d'admission des gaz intégrant en une seule structure un collecteur et un échangeur de chaleur. Dans une première variante, le collecteur comporte un boîtier creux renforcé dans lequel est reçu l'échangeur et qui est fermé par un couvercle plat. Dans une seconde variante, l'échangeur forme l'élément structurel central du module, sur lequel sont rapportées les autres parties constitutives du module, en particulier les parties du collecteur (l'échangeur doit alors faire état de la rigidité et de l'étanchéité requises).

Par le document WO 2010/146063, on connaît un collecteur d'admission intégrant un échangeur de chaleur dont la construction est relativement similaire à celle de la première variante du document précité (FR 2 908 833), à savoir un boîtier creux recevant l'échangeur et fermé par un couvercle plat (assemblage par vis).

Enfin, par les documents WO 2011/061311, WO 2009/141711 et WO 2011/064087, on connaît des constructions de modules d'alimentation en gaz dans lesquelles la fonction collecteur ou répartiteur d'admission est limitée, voire supprimée. Ces modules comportent un échangeur de chaleur assemblé avec un boîtier d'entrée des gaz et avec une plaque ou un cadre de montage pour sa solidarisation directement avec la culasse du moteur, l'étanchéité devant être contrôlée au niveau des deux zones d'assemblage.

Toutefois, les différentes solutions connues indiquées ci-dessus présentent toutes une ou plusieurs des limitations suivantes :
- opération(s) de montage/assemblage supplémentaire(s) pour l'intégration de l'échangeur, après réalisation du corps du collecteur ;
- gestion de plusieurs zones d'étanchéité ;
- modification du procédé de fabrication du collecteur ;
- mise en oeuvre de pièces séparées d'assemblage/de fixation (par exemple des vis) ;
- nécessité d'une structure très rigide et étanche pour l'échangeur ;
- assemblage/fixation à travers la paroi d'enceinte du collecteur ou module ;
- pas de garantie de positionnement correct fiable de l'échangeur dans le collecteur ;
- absence de liaison avec solidarisation rigide entre le collecteur et l'échangeur ou absence de liaison rigide maintenue sur la durée (application de vibrations, déformation du boîtier).

La présente invention a pour but de pallier au moins les principales limitations exposées ci-dessus, préférentiellement toutes.

Ce but est atteint grâce au procédé selon la revendication 1 et au collecteur selon la revendication 11.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
La figure 1 est une vue en coupe simplifiée d'une partie constitutive d'un collecteur ou répartiteur d'admission avec un échangeur de chaleur solidarisé selon un premier mode de réalisation de l'invention (surmoulage) ;
Les figures 2A et 2B sont des vues en coupe simplifiées illustrant l'opération de solidarisation d'un échangeur avec une des parties constitutives d'un collecteur ou répartiteur d'admission (parties mutuellement complémentaires), selon un second mode de réalisation de l'invention (inserts) ;
La figure 3 est une vue en coupe similaire à celle de la figure 2B après achèvement de l'opération de solidarisation par mise en oeuvre d'inserts ;
Les figures 4A et 4B sont des vues en coupe similaires respectivement à celles des figures 1 et 3 illustrant chacune une partie constitutive d'un collecteur à laquelle est solidarisé un échangeur selon un troisième mode de réalisation de l'invention (bouterollage) ;
Les figures 5 et 6 sont des vues en coupe simplifiées d'un collecteur ou répartiteur après assemblage de ses deux parties constitutives, l'échangeur étant solidarisé à l'une des deux parties uniquement, selon les modes de solidarisation illustrés respectivement aux figures 1 et 2A ;
Les figures 7A et 7B sont des vues en coupe respectivement avant et après assemblage des deux parties constitutives d'un collecteur ou répartiteur selon l'invention, l'échangeur étant solidarisé avec l'une des deux parties avant assemblage (selon la figure 1) et avec l'autre des deux parties durant l'assemblage du corps du collecteur ;
Les figures 8A et 8B illustrent deux phases opératoires d'un mode de réalisation du procédé de fabrication selon l'invention d'un collecteur avec un échangeur intégré, à savoir une phase préliminaire d'assemblage d'une plaque intermédiaire avec l'échangeur (figure 8A) et une phase finale d'assemblage des deux parties constitutives du collecteur (figure 8B), la phase intermédiaire de solidarisation du collecteur sur la première partie constitutive étant similaire à celle représentée sur la figure 2A, et,
Les figures 9 à 15 sont des vues en coupe simplifiées d'un collecteur incorporant un échangeur, ces figures illustrant différents modes de réalisation de la solidarisation de l'échangeur avec deux parties constitutives du collecteur.

L'invention vise un procédé de fabrication d'un collecteur ou répartiteur d'admission 1, préférentiellement en matériau thermoplastique, intégrant au moins un échangeur de chaleur 2 logé dans son volume intérieur de manière à obtenir un module unitaire structurellement et remplissant les fonctions collecteur et échangeur.

Ce module collecteur/échangeur est formé par l'assemblage d'au moins deux parties constitutives 3, 4 complémentaires, avantageusement d'un seul tenant chacune et préférentiellement sous forme de coques creuses (c'est-à-dire délimitant chacune une partie du volume intérieur). Dans ce module, ledit échangeur 2 est relié en vue de son maintien à au moins l'une de ses deux parties constitutives 3, 4.

Ce procédé consiste tout d'abord à fournir lesdites parties constitutives 3, 4 (par exemple par moulage de matériau thermoplastique, éventuellement chargé), puis à les assembler pour former ledit collecteur 1 et à monter ledit au moins un échangeur de chaleur 2.

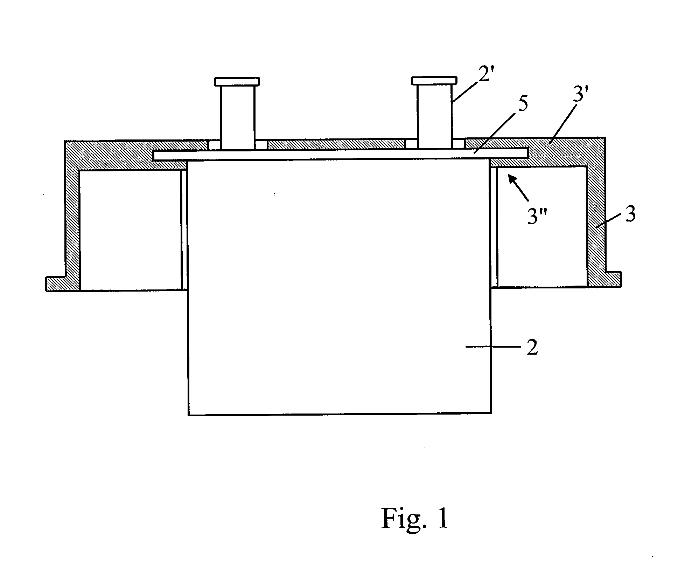

Conformément à l'invention et comme illustré au moins partiellement sur les figures 1 à 4 et 7A, ce procédé consiste, préalablement à l'opération d'assemblage, à solidariser rigidement et directement l'échangeur 2 avec l'une 3 ou 4 desdites parties constitutives 3, 4 en matériau thermoplastique, en préservant la continuité de la paroi 3', 4' de ladite partie constitutive, en particulier au niveau du ou des sites de solidarisation 3", 4", puis à assembler cette partie constitutive 3, 4 équipée de l'échangeur 2, préférentiellement par soudure par vibration, avec l'autre ou une autre partie 4 ou 3 constitutive dudit collecteur d'admission 1.

En accord avec l'invention, la solidarisation rigide de l'échangeur 2 avec la partie constitutive concernée 3 ou 4 du collecteur 1 est réalisée par imbrication ou accrochage mutuel intime d'une partie de l'échangeur ou d'au moins un accessoire de ce dernier 5, 6 avec le matériau formant la paroi 3', 4' de la partie constitutive concernée 3 ou 4 ou au moins un appendice 7 d'un seul tenant de cette paroi, la partie ou l'accessoire 5, 6 s'engageant dans la paroi 3', 4', préférentiellement sans la traverser, ou l'appendice 7 s'engageant dans la partie ou l'accessoire 5, 6.

Toujours selon l'invention, il peut être préférentiellement prévu que la liaison par engagement mécanique ou accrochage mutuel entre l'échangeur 2 et la paroi 3', 4' de la partie constitutive concernée 3, 4 soit réalisée, ou au moins verrouillée, par un traitement thermique ou une opération à caractère thermique, d'une partie au moins du matériau formant ladite paroi 3', 4', et rendant ce dernier apte à venir en prise avec une partie au moins de l'échangeur 2 pour réaliser une liaison rigide avec la paroi considérée.

Ces dispositions particulières du procédé selon l'invention permettent de garantir un positionnement précis de l'échangeur 2 dans le collecteur 1 lors de sa fabrication et de maintenir fiablement ce positionnement ultérieurement.

De plus, ce procédé n'entraîne aucune opération de montage ou d'assemblage de l'échangeur 2 durant ou après l'assemblage des parties constitutives 3, 4 du collecteur 1.

En outre, ce procédé n'entraîne pas non plus de modification ou de complexification du procédé de fabrication du collecteur 1 lui-même, la solidarisation de l'échangeur 2 étant réalisée préalablement à l'assemblage des parties 3, 4 du collecteur ou durant cet assemblage, sans en modifier le mode opératoire.

Par ailleurs, la mise en oeuvre de ce procédé de fabrication, et en particulier le montage de l'échangeur, n'a aucun impact sur l'étanchéité du collecteur par rapport au milieu extérieur, en particulier au niveau des zones d'assemblage, ni sur l'intégrité structurelle de ses parois extérieures 3', 4'.

Enfin, aucune pièce de fixation supplémentaire n'est nécessaire pour réaliser la solidarisation de l'échangeur 2, en particulier durant et après l'assemblage des parties 3, 4 du collecteur 1.

En particulier, le traitement thermique peut consister en une fusion localisée du matériau de la paroi 3', 4' considérée apte à verrouiller un engagement mécanique.

Ainsi, ledit traitement thermique ou l'opération équivalente à caractère thermique peut être réalisé(e) durant la fabrication même de la partie 3, 4 considérée (par exemple surmoulage) ou postérieurement à cette fabrication (refusion localisée du matériau).

Conformément à un premier mode de réalisation du procédé selon l'invention, ressortant notamment des figures 1, 5, 7A, 7B, 9 et 10 des dessins annexés, la solidarisation de l'échangeur 2 avec la partie constitutive 3, 4 du collecteur 1 est réalisée lors de la fabrication de ladite paroi constitutive 3 ou 4, par surmoulage d'une partie ou d'un accessoire 5 de l'échangeur 2, par exemple une bride, une collerette ou une plaque, éventuellement perforée, par le matériau formant ladite partie constitutive 3 ou 4, ladite partie ou accessoire 5 de l'échangeur 2 se retrouvant ainsi au moins partiellement intégrée dans ladite paroi constitutive 3 ou 4.

Ce mode de réalisation permet, outre la fourniture d'une liaison très rigide compte tenu l'interface de contact intime et de dimension importante entre la partie 3, 4 considérée, d'aboutir directement à une excellente étanchéité entre l'échangeur et le collecteur au niveau de leurs zones d'assemblage, en particulier autour des orifices de passage 10 des embouts de raccordement 2' de l'échangeur 2.

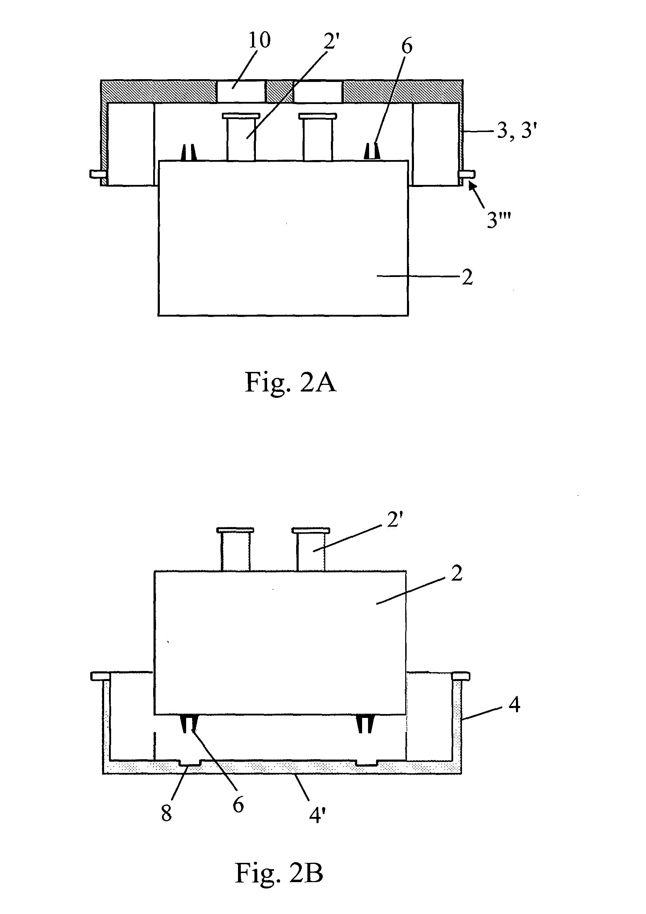

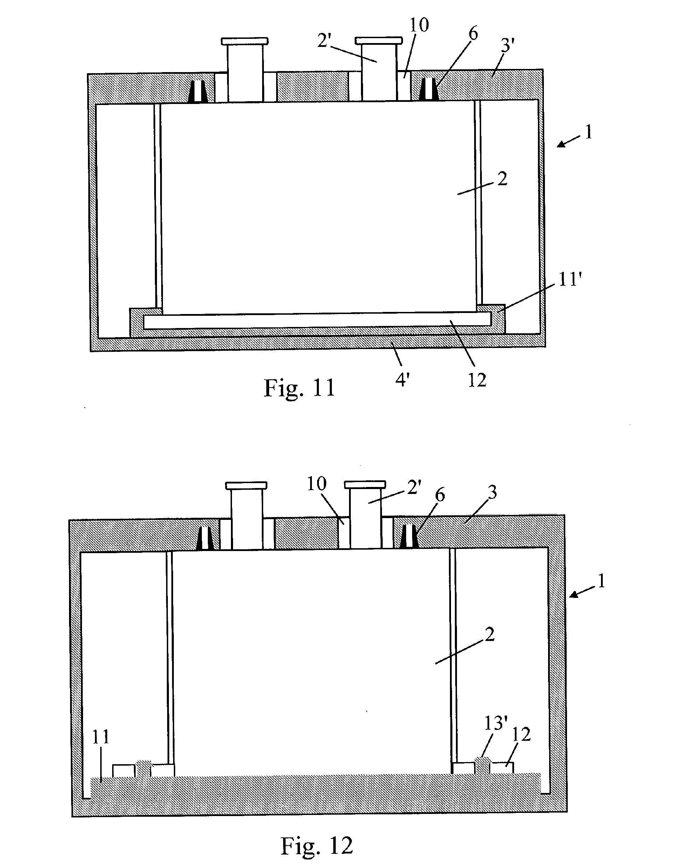

En accord avec un deuxième mode de réalisation de l'invention, illustré aux figures 2, 3, 8B, 11 et 12, la solidarisation de l'échangeur 2 avec la partie constitutive concernée 3 ou 4 du collecteur 1 est réalisée par emboîtement, le cas échéant à force, d'au moins une pièce insert 6 formée ou rapportée sur l'échangeur 2, et éventuellement préchauffée, dans au moins un site de réception 8 correspondant ménagé dans la paroi 3', 4' de la partie constitutive concernée 3 ou 4.

Les sites de réception 8 consistent avantageusement en des empreintes de formes complémentaires à celles des pièces 6 et réalisées lors du moulage de la partie constitutive concernée 3 ou 4.

En préchauffant les pièces d'insert 6, préférentiellement métalliques et formées ou rapportées sur le cadre structurel de l'échangeur 2, il est possible d'aboutir à un verrouillage par accrochage intime entre ces pièces 6 et le matériau de la paroi 3' ou 4', partiellement fondu, en particulier lorsque lesdites pièces présentent des surfaces irrégulières (crans, décrochements, renfoncements, ...) et/ou des structures perforées (établissement de pont de matière).

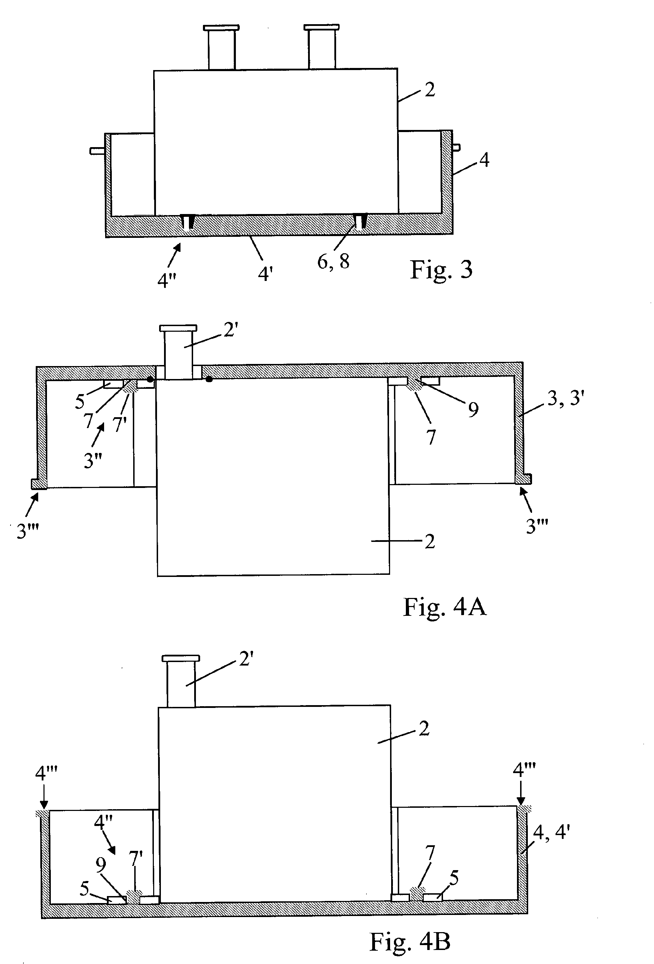

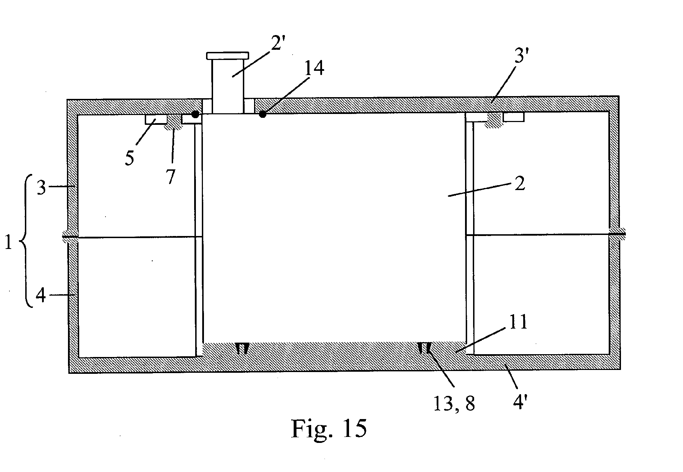

Selon un troisième mode de réalisation du procédé selon l'invention, ressortant notamment des figures 4 et 13 à 15, la solidarisation de l'échangeur 2 avec la partie constitutive concernée 3 ou 4 du collecteur 1 est réalisée par bouterollage, des appendices 7 en forme de rivets ou analogues étant moulés ou façonnés au niveau de la paroi 3', 4' de ladite partie constitutive 3 ou 4, puis engagés dans des sites complémentaires 9 d'une partie ou d'un accessoire 5 de l'échangeur 2, par exemple une bride ou une plaque, lors de l'assemblage de ce dernier avec ladite partie constitutive 3 ou 4 et, enfin, déformés au niveau de leurs extrémités libres 7', avantageusement par application de chaleur, pour verrouiller la liaison de solidarisation.

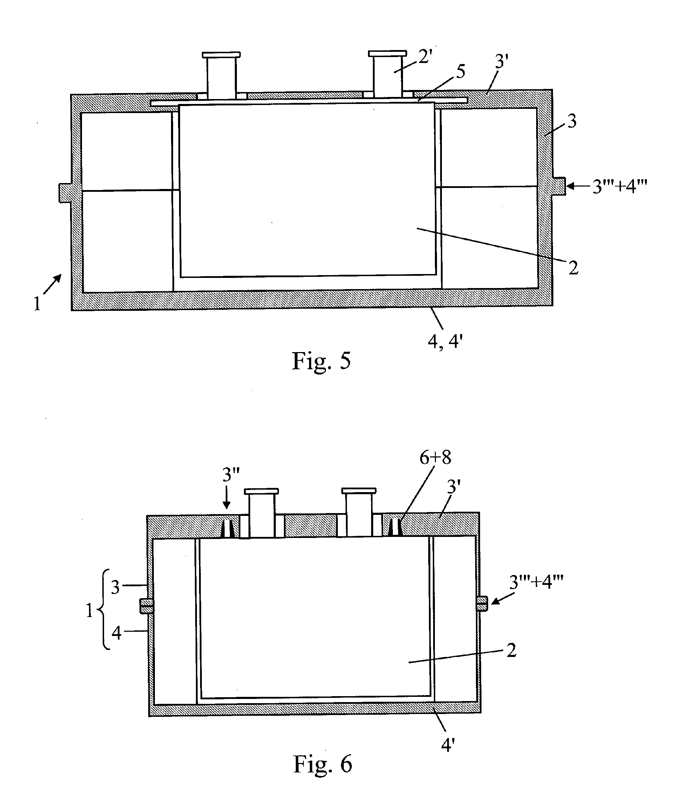

Lorsque l'échangeur 2 n'est pas destiné à participer à la rigidification du collecteur 1, ni à former une séparation périphériquement étanche dans le volume intérieur dudit collecteur, ledit échangeur 2 peut être uniquement solidarisé à une seule partie constitutive 3 ou 4 du collecteur 1 de manière à être suspendu dans ce dernier, la partie constitutive concernée 3 étant soit celle comportant des ouvertures 10 pour le passage des embouts 2' de raccordement fluidique de l'échangeur 2 (figures 5, 6), soit la partie constitutive complémentaire 4.

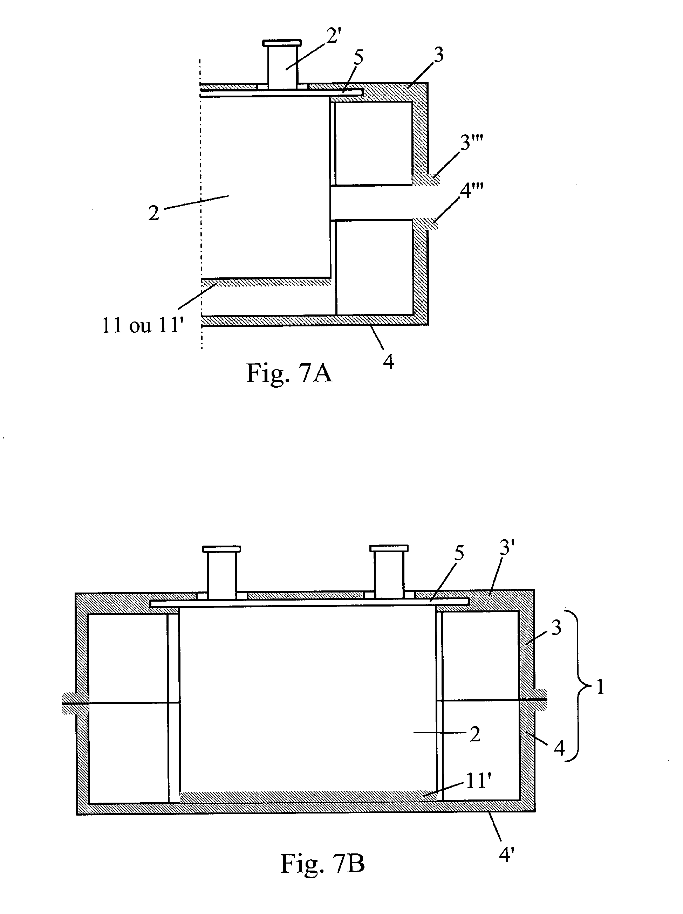

De manière alternative et comme le montrent les figures 7 à 15, l'échangeur 2 peut être solidarisé à deux ou aux deux parties constitutives 3 et 4 du collecteur 1, la seconde solidarisation étant réalisée durant l'assemblage des parties constitutives concernées 3 et 4.

Dans ce cas, l'échangeur 2 présentera préférentiellement une structure rigide, en particulier un cadre support apte à résister à des contraintes en traction et en compression.

Lorsque l'échangeur est solidarisé au collecteur au niveau de portions opposées de la paroi de ce dernier, le procédé consiste avantageusement, avant l'opération d'assemblage des deux parties constitutives concernées 3 et 4, à rapporter ou à fixer sur une face de l'échangeur 2, opposée à sa face en contact avec la partie constitutive 3 du collecteur 1 solidarisée avant assemblage, une plaque 11 ou une couche 11' de matériau thermoplastique, identique ou au moins compatible avec le matériau formant l'autre ou la seconde partie constitutive 4 et, enfin, à réunir les deux parties constitutives 3 et 4, à savoir celle solidaire de l'échangeur 2 et l'autre par juxtaposition et assemblage par soudage au niveau de leurs bords 3"', 4"' de parois 3', 4' en contact, la couche 11' ou la plaque 11 de matériau thermoplastique rapportée sur l'échangeur 2 venant en appui sous pression sur la paroi 4' de l'autre ou la seconde partie constitutive 4 lors de l'assemblage par soudage (laser, miroir, par vibration, etc).

On peut noter que cette double solidarisation de l'échangeur 2 avec le collecteur 1 s'effectue sans interférer avec le procédé de fabrication du collecteur 1 lui-même, sans entraîner d'opérations supplémentaires, ni mettre en oeuvre de moyens supplémentaires.

Comme le montrent les figures 7, 11 et 14, la couche 11' de matériau thermoplastique est rapportée sur une partie ou un accessoire 12 de l'échangeur 2, par exemple une plaque ou bride de ce dernier, par surmoulage.

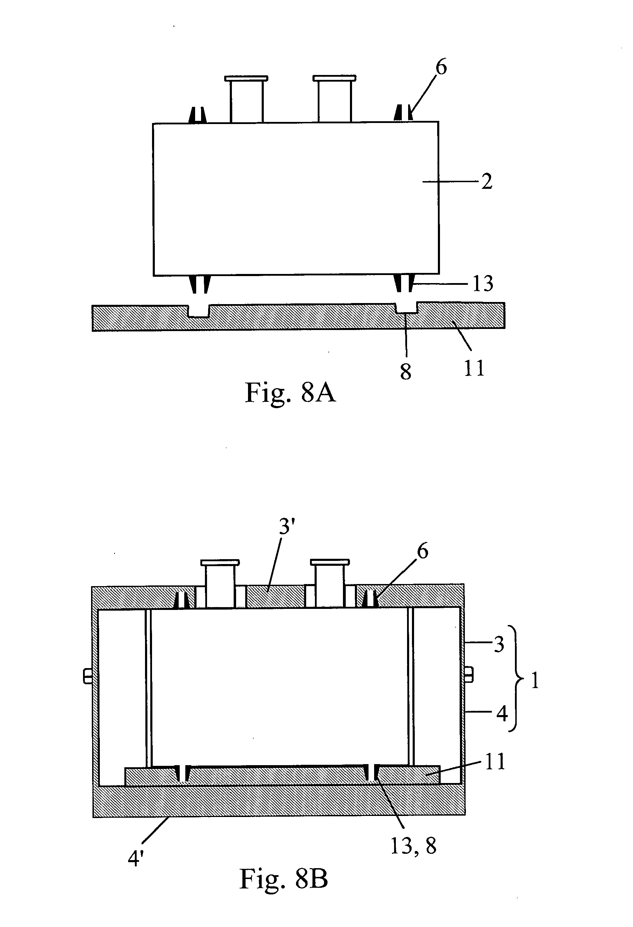

En variante et comme illustré sur les figures 8B, 9, 10, 12, 13 et 15, la plaque 11 de matériau thermoplastique peut être rapportée sur une partie ou un accessoire 12 de l'échangeur 2, par exemple une plaque ou bride de ce dernier, par au moins une liaison avec engagement ou accrochage mutuel, par exemple par l'intermédiaire d'inserts 13 ou de bouterolles 13'. Lorsque des inserts 13 sont prévus sur l'échangeur 2, des sites en creux 8 peuvent être prévus sur la plaque 11.

La mise en oeuvre d'une plaque ou bride 12 permet d'aboutir à une liaison plus rigide entre l'échangeur et la plaque 11 ou couche 11' et, de ce fait, renforce également la seconde liaison entre l'échangeur 2 et le collecteur 1.

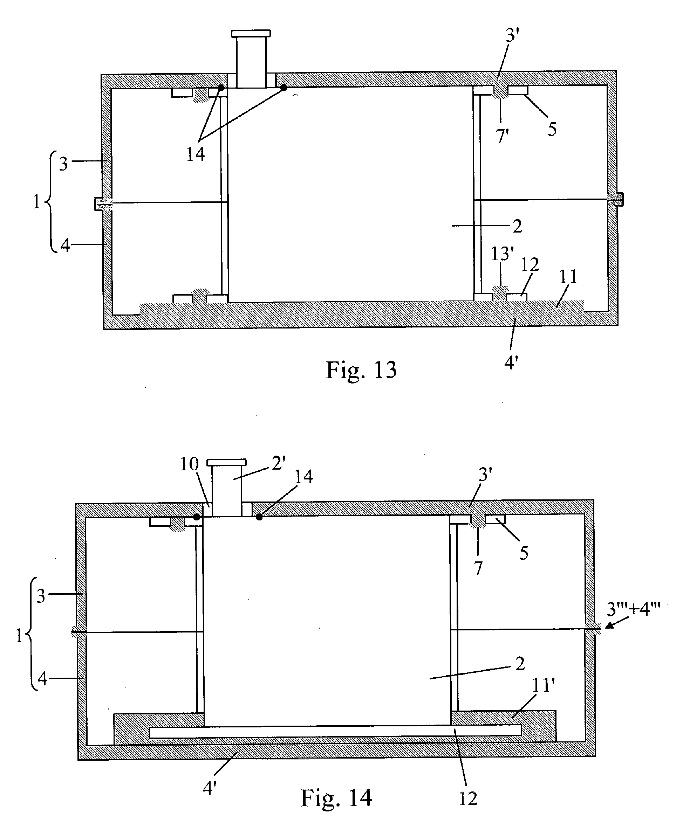

Comme le montrent à titre d'exemple les figures 13 à 15 et pour autant que le mode de solidarisation de l'échangeur 2 avec le collecteur 1 ne confère pas directement une étanchéité suffisante, le procédé peut, en outre, consister à fournir, autour de chaque ouverture traversante 10 de la paroi 3' de la partie constitutive considérée 3 destinée au passage des embouts 2' de raccordement fluidique de l'échangeur 2, un dispositif d'étanchéité 14 entre les faces de l'échangeur 2 et de la paroi 3' en contact mutuel, par exemple sous la forme d'un joint de compression rapporté au niveau d'une zone de la face de l'échangeur 2 entourant l'embout 2' considéré.

La présente invention a également pour objet, comme le montrent au moins partiellement les figures 5, 6, 7B, 8B et 9 à 15, un collecteur ou répartiteur d'admission 1 intégrant au moins un échangeur de chaleur 2 logé dans son volume intérieur.

Ce collecteur 1 est formé d'au moins deux parties constitutives 3, 4 en matériau thermoplastique, chacune d'un seul tenant et assemblées entre elles. L'échangeur 2 est, quant à lui, maintenu dans ledit collecteur 1 en étant relié à au moins l'une 3 ou 4 de ses deux parties constitutives 3 et 4.

Selon l'invention, l'échangeur 2 est solidarisé rigidement et directement avec au moins l'une desdites parties constitutives 3, 4, la paroi 3', 4' de ladite partie constitutive 3 ou 4 présentant une continuité structurelle au niveau du ou des sites de solidarisation 3", 4".

Bien que sur les figures des dessins annexés le collecteur 1 présente une section de forme sensiblement rectangulaire, d'autres formes sont bien entendu possibles.

De même, ce collecteur 1 peut être formé de deux parties constitutives uniquement, soit de plus de deux parties, lorsque sa forme est particulièrement complexe, la troisième partie étant, dans ce cas, rapportée ultérieurement sur le sous-ensemble formé par les deux premières parties constitutives 3 et 4 et intégrant l'échangeur 2.

En outre, le matériau constitutif des parois 3' et 4' est avantageusement un matériau thermoplastique compatible avec l'application visée, en particulier un matériau polymère du type polypropylène ou polyamide, préférentiellement chargé en fibres en vue de son renforcement structurel.

L'assemblage des parties constitutives 3, 4 s'effectue de manière connue par soudage par vibration (ou par laser, ou miroir, par exemple) au niveau de chemins de soudure prévus sur les bords en contact 3"' et 4"' desdites parties 3 et 4.

En accord avec l'invention, la solidarisation rigide de l'échangeur 2 avec la partie constitutive concernée 3 ou 4 du collecteur 1 consiste en une imbrication ou un accrochage mutuel d'une partie de l'échangeur 2 ou d'au moins un accessoire de ce dernier 5, 6 avec le matériau formant la paroi 3', 4' de la partie constitutive concernée 3 ou 4 ou au moins un appendice 7 d'un seul tenant de cette paroi, la partie ou l'accessoire 5, 6 s'engageant dans la paroi 3', 4' sans la traverser ou l'appendice 7 s'engageant dans la partie ou l'accessoire 5, 6.

La liaison par engagement mécanique ou accrochage mutuel est réalisée ou au moins verrouillée par une fusion localisée et/ou surfacique du matériau de la paroi 3', 4' de la partie constitutive concernée 3 ou 4.

Selon une première variante ressortant des figures 2, 3, 8B, 11 et 12, la liaison de solidarisation entre échangeur 2 et partie constitutive 3 ou 4 concernée consiste en une liaison mécanique par l'intermédiaire de pièces d'insert 6 de l'échangeur 2 emboîtées dans des sites de réception 8 correspondants de la paroi de ladite partie constitutive 3 ou 4, une éventuelle fusion localisée du matériau de la paroi 3', 4' pouvant être présente.

En accord avec une seconde variante ressortant des figures 4 et 13 à 15, la liaison rigide de solidarisation entre l'échangeur 2 et la partie constitutive concernée 3 ou 4 consiste en une liaison bouterollée, mettant en oeuvre des rivets 7 moulés ou formés sur la paroi 3', 4' de ladite partie constitutive 3 ou 4, avec le matériau de cette dernière et engagés dans des sites complémentaires 9 d'une partie ou d'un accessoire 5 de l'échangeur 2, tel qu'une bride ou une plaque perforée, les extrémités libres 7' desdits rivets 7 étant déformés.

Selon une troisième variante ressortant des figures 1, 5, 7A, 7B, 9 et 10, l'échangeur 2 comporte une partie ou un accessoire 5, tel qu'une bride ou une plaque, intégré(e) au moins partiellement dans le matériau de la paroi 3', 4' de ladite partie constitutive 3 ou 4, par exemple par surmoulage.

L'échangeur 2 peut être uniquement solidarisé à une seule partie constitutive 3 ou 4 du collecteur 1 de manière à être suspendu dans ce dernier (figures 5 et 6), la partie constitutive concernée 3 étant soit celle comportant des ouvertures 10 pour le passage des embouts 2' de raccordement fluidique de l'échangeur 2, soit la partie constitutive complémentaire 4.

De manière alternative, l'échangeur 2 peut être solidaire rigidement de deux ou des deux parties constitutives 3, 4 du collecteur 1 au niveau de deux faces mutuellement opposées desdites parties 3, 4 formant ainsi un renfort structurel interne pour ledit collecteur 1 (figures 7 à 15).

Afin d'autoriser un liaisonnement durant l'assemblage par soudure par vibration des parties constitutives 3 et 4, sans nécessiter de pièces de liaison ou de fixation additionnelles, la seconde liaison rigide de solidarisation peut préférentiellement comprendre une couche 11' ou une plaque 11 de matériau thermoplastique rapportée ou fixée sur une partie ou un accessoire 12 de l'échangeur 2, tel qu'une bride ou une plaque, et solidarisée par soudure par vibration avec la paroi 4' de l'autre ou de la seconde partie constitutive 4 du collecteur 1.

Selon une caractéristique avantageuse, la couche 11' rapportée sur l'échangeur 2 est une couche surmoulée sur une plaque ou bride 12 de ce dernier, éventuellement à structure perforée.

Selon une autre caractéristique avantageuse, la plaque 11 rapportée sur l'échangeur 2 est fixée sur l'échangeur 2 ou un accessoire 12 de ce dernier, tel qu'une bride ou une plaque, par l'intermédiaire d'inserts 13 ou de bouterolles 13'.

Comme le montrent les figures 7 à 15 des dessins annexés, les différents modes de réalisation de la solidarisation de l'échangeur 2 avec les parties constitutives 3 et 4, soit directement pour la première liaison, soit par l'intermédiaire d'une plaque 11 ou d'une couche 11' pour la seconde liaison, peuvent être panachés entre eux, en fonction du mode de solidarisation le plus approprié, compte tenu du but à atteindre (liaison directement étanche, possibilité ou non de surmouler, épaisseur locale de la paroi 3' ou 4' concernée, localisation et extension des sites de solidarisation, ...).

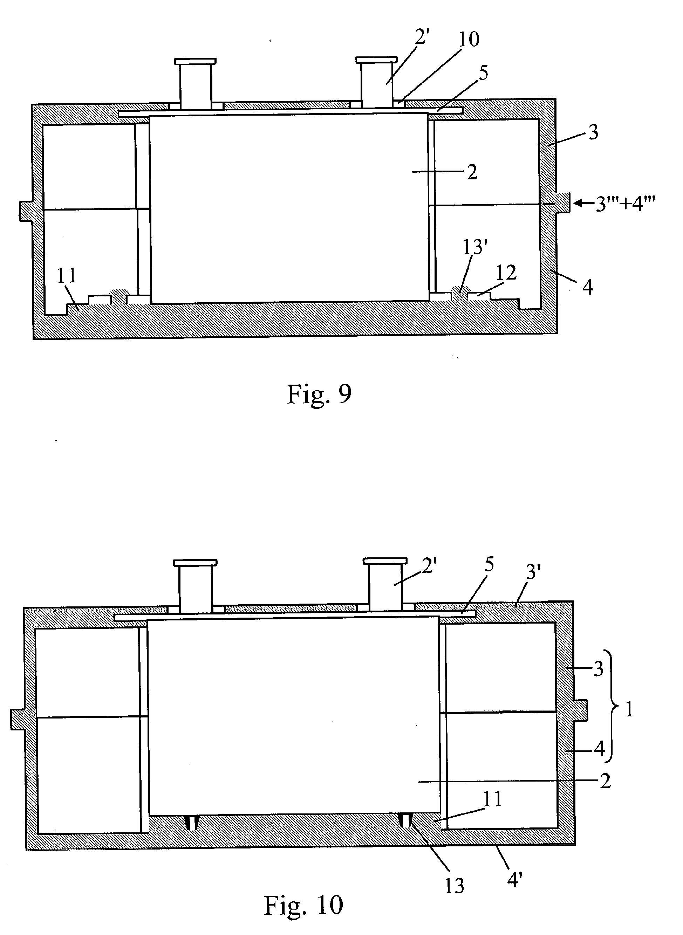

De plus, en fonction du type de solidarisation (simple ou double) et de la nature de cette dernière, l'échangeur 2 peut être pourvu d'une seule plaque ou bride 5 (figures 5, 7B, 10 à 12 et 15), de deux plaques ou brides opposées 5 et 12 (figures 9, 13 et 14) ou d'aucune plaque ou bride (figures 6 et 8B).

En relation avec un montage préféré de l'échangeur 2, ce dernier divise le volume intérieur du collecteur 1 en deux parties, le cas échéant en réalisant une étanchéité périphérique entre la paroi 3', 4' de ce dernier et le contour extérieur dudit échangeur 2.

Préférentiellement, le collecteur 1 intégrant l'échangeur 2 est obtenu par l'intermédiaire du procédé de fabrication décrit précédemment.

## Revendications

1. Procédé de fabrication d'un collecteur ou répartiteur (1) d'admission, préférentiellement en matériau thermoplastique, intégrant au moins un échangeur de chaleur (2) logé dans son volume intérieur de manière à obtenir un module unitaire structurellement, ledit collecteur (1) étant formé par l'assemblage d'au moins deux parties constitutives (3, 4) avantageusement d'un seul tenant chacune et préférentiellement sous forme de coques creuses, et ledit échangeur (2) étant relié en vue de son maintien à au moins l'une de ses deux parties constitutives (3, 4),
ledit procédé consistant à fournir lesdites parties constitutives (3, 4), puis à les assembler pour former ledit collecteur (1) et à monter ledit au moins un échangeur de chaleur (2),
ledit procédé consistant également, préalablement à l'opération d'assemblage, à solidariser rigidement et directement l'échangeur (2) avec l'une (3 ou 4) desdites parties constitutives (3, 4) en matériau thermoplastique, en préservant la continuité de la paroi (3', 4') de ladite partie constitutive, en particulier au niveau du ou des sites de solidarisation (3", 4"), puis à assembler cette partie constitutive (3, 4) équipée de l'échangeur (2), préférentiellement par soudure avec l'autre ou une autre partie (4 ou 3) constitutive dudit collecteur d'admission (1),
procédé **caractérisé en ce que** la solidarisation rigide de l'échangeur (2) avec la partie constitutive concernée (3 ou 4) du collecteur (1) est réalisée par imbrication ou accrochage mutuel intime d'une partie de l'échangeur ou d'au moins un accessoire de ce dernier (5, 6) avec le matériau formant la paroi (3', 4') de la partie constitutive concernée (3 ou 4) ou au moins un appendice (7) d'un seul tenant de cette paroi, la partie ou l'accessoire (5, 6) s'engageant dans la paroi (3', 4') sans la traverser ou l'appendice (7) s'engageant dans la partie ou l'accessoire (5, 6),
ladite liaison par engagement mécanique ou accrochage mutuel entre l'échangeur (2) et la paroi (3', 4') de la partie constitutive concernée (3, 4) étant réalisée, ou au moins verrouillée, par un traitement thermique ou une opération à caractère thermique, d'une partie au moins du matériau formant ladite paroi (3', 4').

2. Procédé selon la revendication 1, **caractérisé en ce que** la solidarisation de l'échangeur (2) avec la partie constitutive (3, 4) du collecteur (1) est réalisée lors de la fabrication de ladite paroi constitutive (3 ou 4), par surmoulage d'une partie ou d'un accessoire (5) de l'échangeur (2), par exemple une bride, une collerette ou une plaque, éventuellement perforée, par le matériau formant ladite partie constitutive (3 ou 4), ladite partie ou accessoire (5) de l'échangeur (2) se retrouvant ainsi au moins partiellement intégrée dans ladite paroi constitutive (3 ou 4).

3. Procédé selon l'une quelconque des revendications 1 et 2, **caractérisé en ce que** la solidarisation de l'échangeur (2) avec la partie constitutive concernée (3 ou 4) du collecteur (1) est réalisée par emboîtement, le cas échéant à force, d'au moins une pièce insert (6) formée ou rapportée sur l'échangeur (2), et éventuellement préchauffée, dans au moins un site de réception (8) correspondant ménagé dans la paroi (3', 4') de la partie constitutive concernée (3 ou 4).

4. Procédé selon l'une quelconque des revendications 1 et 2, **caractérisé en ce que** la solidarisation de l'échangeur (2) avec la partie constitutive concernée (3 ou 4) du collecteur (1) est réalisée par bouterollage, des appendices (7) en forme de rivets ou analogues étant moulés ou façonnés au niveau de la paroi (3', 4') de ladite partie constitutive (3 ou 4), puis engagés dans des sites complémentaires (9) d'une partie ou d'un accessoire (5) de l'échangeur (2), par exemple une bride ou une plaque, lors de l'assemblage de ce dernier avec ladite partie constitutive (3 ou 4) et, enfin, déformés au niveau de leurs extrémités libres (7'), avantageusement par application de chaleur, pour verrouiller la liaison de solidarisation.

5. Procédé selon l'une quelconque des revendications 1 à 4, **caractérisé en ce que** l'échangeur (2) est uniquement solidarisé à une seule partie constitutive (3 ou 4) du collecteur (1) de manière à être suspendu dans ce dernier, la partie constitutive concernée (3) étant soit celle comportant des ouvertures (10) pour le passage des embouts (2') de raccordement fluidique de l'échangeur (2), soit la partie constitutive complémentaire (4).

6. Procédé selon l'une quelconque des revendications 1 à 4, **caractérisé en ce que** l'échangeur (2) est solidarisé à deux ou aux deux parties constitutives (3 et 4) du collecteur (1), la seconde solidarisation étant réalisée durant l'assemblage des parties constitutives concernées (3 et 4).

7. Procédé selon la revendication 6, **caractérisé en ce qu'il** consiste, avant l'opération d'assemblage des deux parties constitutives concernées (3 et 4), à rapporter ou à fixer sur une face de l'échangeur (2), opposée à sa face en contact avec la partie constitutive (3) du collecteur (1) solidarisée avant assemblage, une plaque (11) ou une couche (11') de matériau thermoplastique, identique ou au moins compatible avec le matériau formant l'autre ou la seconde partie constitutive (4) et, enfin, à réunir les deux parties constitutives (3 et 4), à savoir celle solidaire de l'échangeur (2) et l'autre par juxtaposition et assemblage par soudage au niveau de leurs bords (3"', 4"') de parois (3', 4') en contact, la couche (11') ou la plaque (11) de matériau thermoplastique rapportée sur l'échangeur (2) venant en appui sous pression sur la paroi (4') de l'autre ou la seconde partie constitutive (4) lors de l'assemblage par soudage.

8. Procédé selon la revendication 7, **caractérisé en ce que** la couche (11') de matériau thermoplastique est rapportée sur une partie ou un accessoire (12) de l'échangeur (2), par exemple une plaque ou bride de ce dernier, par surmoulage.

9. Procédé selon la revendication 8, **caractérisé en ce que** la plaque (11) de matériau thermoplastique est rapportée sur une partie ou un accessoire (12) de l'échangeur (2), par exemple une plaque ou bride de ce dernier, par au moins une liaison avec engagement ou accrochage mutuel, par exemple par l'intermédiaire d'inserts (13) ou de bouterolles (13').

10. Procédé selon l'une quelconque des revendications 1 à 9, **caractérisé en ce qu'**il consiste à fournir, autour de chaque ouverture traversante (10) de la paroi (3') de la partie constitutive considérée (3) destinée au passage des embouts (2') de raccordement fluidique de l'échangeur (2), un dispositif d'étanchéité (14) entre les faces de l'échangeur (2) et de la paroi (3') en contact mutuel.

11. Collecteur ou répartiteur d'admission (1) intégrant au moins un échangeur de chaleur (2) logé dans son volume intérieur, ledit collecteur étant formé d'au moins deux parties constitutives (3, 4) en matériau thermoplastique, chacune d'un seul tenant et assemblées entre elles, et ledit échangeur (2) étant maintenu dans ledit collecteur (1) en étant relié à au moins l'une de ses deux parties constitutives (3, 4),
collecteur ou répartiteur (1) dans lequel l'échangeur (2) est solidarisé rigidement et directement avec au moins l'une desdites parties constitutives (3, 4), la paroi (3', 4') de ladite partie constitutive (3 ou 4) présentant une continuité structurelle au niveau du ou des sites de solidarisation (3", 4"),
collecteur (1) **caractérisé en ce que** la solidarisation rigide de l'échangeur (2) avec la partie constitutive concernée (3 ou 4) du collecteur (1) consiste en une imbrication ou un accrochage mutuel d'une partie de l'échangeur (2) ou d'au moins un accessoire de ce dernier (5, 6) avec le matériau formant la paroi (3', 4') de la partie constitutive concernée (3 ou 4) ou au moins un appendice (7) d'un seul tenant de cette paroi, la partie ou l'accessoire (5, 6) s'engageant dans la paroi (3', 4') sans la traverser ou l'appendice (7) s'engageant dans la partie ou l'accessoire (5, 6),
la liaison par engagement mécanique ou accrochage mutuel étant réalisée, ou au moins verrouillée par une fusion localisée et/ou surfacique du matériau de la paroi (3', 4') de la partie constitutive concernée (3 ou 4).

12. Collecteur selon la revendication 11, **caractérisé en ce que** la liaison de solidarisation entre échangeur (2) et partie constitutive (3 ou 4) concernée consiste en une liaison mécanique par l'intermédiaire de pièces d'insert (6) de l'échangeur (2) emboîtées dans des sites de réception (8) correspondants de la paroi de ladite partie constitutive (3 ou 4), une éventuelle fusion localisée du matériau de la paroi (3', 4') pouvant être présente.

13. Collecteur selon l'une quelconque des revendications 11 et 12, **caractérisé en ce que** la liaison rigide de solidarisation entre l'échangeur (2) et la partie constitutive concernée (3 ou 4) consiste en une liaison bouterollée, mettant en oeuvre des rivets (7) moulés ou formés sur la paroi (3', 4') de ladite partie constitutive (3 ou 4), avec le matériau de cette dernière et engagés dans des sites complémentaires (9) d'une partie ou d'un accessoire (5) de l'échangeur (2), tel qu'une bride ou une plaque perforée, les extrémités libres (7') desdits rivets (7) étant déformés.

14. Collecteur selon l'une quelconque des revendications 11 à 13, **caractérisé en ce que** l'échangeur (2) comporte une partie ou un accessoire (5), tel qu'une bride ou une plaque, intégré(e) au moins partiellement dans le matériau de la paroi (3', 4') de ladite partie constitutive (3 ou 4), par exemple par surmoulage.

15. Collecteur selon l'une quelconque des revendications 11 à 14, **caractérisé en ce que** l'échangeur (2) est uniquement solidarisé à une seule partie constitutive (3 ou 4) du collecteur (1) de manière à être suspendu dans ce dernier, la partie constitutive concernée (3) étant soit celle comportant des ouvertures (10) pour le passage des embouts (2') de raccordement fluidique de l'échangeur (2), soit la partie constitutive complémentaire (4).

16. Collecteur selon l'une quelconque des revendications 11 à 15, **caractérisé en ce que** l'échangeur (2) est solidaire rigidement de deux ou des deux parties constitutives (3, 4) du collecteur (1) au niveau de deux faces mutuellement opposées desdites parties (3, 4) formant ainsi un renfort structurel interne pour ledit collecteur (1).

17. Collecteur selon la revendication 16, **caractérisé en ce que** la seconde liaison rigide de solidarisation comprend une couche (11') ou une plaque (11) de matériau thermoplastique rapportée ou fixée sur une partie ou un accessoire (12) de l'échangeur (2), tel qu'une bride ou une plaque, et solidarisée par soudure avec la paroi (4') de l'autre ou de la seconde partie constitutive (4) du collecteur (1).

18. Collecteur selon la revendication 17, **caractérisé en ce que** la couche (11') rapportée sur l'échangeur (2) est une couche surmoulée sur une plaque ou bride (12) de ce dernier, éventuellement à structure perforée.

19. Collecteur selon la revendication 17, **caractérisé en ce que** la plaque (11) rapportée sur l'échangeur (2) est fixée sur l'échangeur (2) ou un accessoire (12) de ce dernier, tel qu'une bride ou une plaque, par l'intermédiaire d'inserts (13) ou de bouterolles (13').

20. Collecteur selon l'une quelconque des revendications 16 à 19, **caractérisé en ce que** l'échangeur (2) divise le volume intérieur du collecteur (1) en deux parties, le cas échéant en réalisant une étanchéité périphérique entre la paroi (3', 4') de ce dernier et le contour extérieur dudit échangeur (2).

21. Collecteur selon l'une quelconque des revendications 11 à 20, **caractérisé en ce qu'il** est obtenu par l'intermédiaire du procédé de fabrication selon l'une quelconque des revendications 1 à 10.

## Patentansprüche

1. Herstellungsverfahren eines Sammlers oder Einlassverteilers (1), vorzugsweise aus Thermoplastmaterial, der mindestens einen Wärmeaustauscher (2) integriert, der in seinem Innenraum derart untergebracht ist, dass ein strukturmäßig einzelnes Modul erzielt wird, wobei der Sammler (1) durch Zusammenfügen von mindestens zwei Bestandteilen (3, 4) vorteilhafterweise aus einem Stück gebildet ist und vorzugsweise in Form hohler Schalen, und wobei der Wärmeaustauscher (2) zu seinem Halten mit mindestens einem seiner zwei Bestandteile (3, 4) verbunden ist,
wobei das Verfahren darin besteht, die Bestandteile (3, 4) zu liefern, sie dann zusammenzufügen, um den Sammler (1) zu bilden, und den mindestens einen Wärmeaustauscher (2) zu installieren,
wobei das Verfahren auch darin besteht, vor dem Zusammenfügevorgang den Wärmeaustauscher (2) mit einem (3 oder 4) der Bestandteile (3, 4) aus Thermoplastmaterial starr und direkt fest zu verbinden, indem die Kontinuität der Wand (3', 4') des Bestandteils gewahrt wird, insbesondere im Bereich der Stelle oder der Stellen der festen Verbindung (3", 4"), dann dieses Bestandteil (3, 4), das mit dem Wärmeaustauscher (2) ausgestattet ist, vorzugsweise durch Schweißen mit dem anderen oder einem anderen Bestandteil (4 oder 3) des Einlasssammlers (1) zusammenzufügen,
Verfahren **dadurch gekennzeichnet, dass** die starre feste Verbindung des Wärmeaustauschers (2) mit dem betroffenen Bestandteil (3 oder 4) des Sammlers (1) durch Verschachteln oder gegenseitiges enges Einhängen eines Teils des Wärmeaustauschers oder mindestens eines Zubehörteils dieses Letzteren (5, 6) mit dem die Wand (3', 4') bildenden Material des betroffenen Bestandteils (3 oder 4) oder mindestens einem Ansatz (7) aus einem Stück mit dieser Wand, hergestellt ist, wobei der Teil oder das Zubehörteil (5, 6) in die Wand (3', 4') eingreift, ohne sie zu durchqueren, oder der Ansatz (7) in den Teil oder das Zubehörteil (5, 6) eingreift,
wobei die Verbindung durch mechanisches Eingreifen oder gegenseitiges Einhängen zwischen dem Wärmeaustauscher (2) und der Wand (3', 4') des betroffenen Bestandteils (3, 4) durch eine Wärmebehandlung oder einen Vorgang mit thermischem Charakter mindestens eines Teils des Materials, das die Wand (3', 4') bildet, hergestellt oder mindestens verriegelt wird.

2. Verfahren nach Anspruch 1, **dadurch gekennzeichnet, dass** die feste Verbindung des Wärmeaustauschers (2) mit dem Bestandteil (3, 4) des Sammlers (1) bei der Herstellung der konstitutiven Wand (3 oder 4) durch Abformen eines Teils oder eines Zubehörteils (5) des Wärmeaustauschers (2), zum Beispiel einen Flansch, einen Kragen oder eine Platte, die eventuell perforiert ist, durch das Material, das das Bestandteil (3 oder 4) bildet, hergestellt ist, wobei der Teil oder das Zubehörteil (5) des Wärmeaustauschers (2) daher mindestens teilweise in die konstitutive Wand (3 oder 4) integriert wird.

3. Verfahren nach einem der Ansprüche 1 und 2, **dadurch gekennzeichnet, dass** die feste Verbindung des Wärmeaustauschers (2) mit dem betroffenen Bestandteil (3 oder 4) des Sammlers (1) durch Einrasten, gegebenenfalls unter Kraftanwendung, mindestens eines Einsatzteils (6), das auf dem Wärmeaustauscher (2) ausgebildet oder angebaut ist und eventuell vorgewärmt wird, in mindestens eine entsprechende Aufnahmestelle (8), die in der Wand (3', 4') des betroffenen Bestandteils (3 oder 4) eingerichtet ist, ausgeführt ist.

4. Verfahren nach einem der Ansprüche 1 und 2, **dadurch gekennzeichnet, dass** die feste Verbindung des Wärmeaustauschers (2) mit dem betroffenen Bestandteil (3 oder 4) des Sammlers (1) durch Nietstempeln hergestellt ist, wobei Ansätze (7) in Form von Nieten oder Ähnlichem im Bereich der Wand (3', 4') des Bestandteils (3 oder 4) geformt oder gestaltet und dann in die komplementären Stellen (9) eines Teils oder eines Zubehörteils (5) des Wärmeaustauschers (2), zum Beispiel in einen Flansch oder eine Platte, beim Zusammenfügen dieses Letzteren mit dem Bestandteil (3 oder 4) eingreifen und schließlich auf dem Niveau ihrer freien Enden (7') vorteilhafterweise durch Anlegen von Wärme verformt wird, um die feste Verbindung zu verriegeln.

5. Verfahren nach einem der Ansprüche 1 bis 4, **dadurch gekennzeichnet, dass** der Wärmeaustauscher (2) nur mit einem einzigen Bestandteil (3 oder 4) des Sammlers (1) derart fest verbunden ist, dass er in diesem Letzteren hängt, wobei das betroffene Bestandteil (3) entweder dasjenige ist, das Öffnungen (10) für das Durchgehen der Fluidanschlussansätze (2') des Wärmeaustauschers (2) aufweist, oder das komplementäre Bestandteil (4) ist.

6. Verfahren nach einem der Ansprüche 1 bis 4, **dadurch gekennzeichnet, dass** der Wärmeaustauscher (2) fest mit zwei oder den zwei Bestandteilen (3 und 4) des Wärmeaustauschers (1) verbunden ist, wobei die zweite feste Verbindung während des Zusammenfügens der betroffenen Bestandteile (3 und 4) ausgeführt wird.

7. Verfahren nach Anspruch 6, **dadurch gekennzeichnet, dass** es vor dem Zusammenfügevorgang der zwei betroffenen Bestandteile (3 und 4) darin besteht, auf einer Seite des Wärmeaustauschers (2), die seiner Seite in Berührung mit dem Bestandteil (3) des Sammlers (1), die vor dem Zusammenfügen fest verbunden wird, gegenüber liegt, eine Platte (11) oder eine Schicht (11') aus Thermoplastmaterial, die identisch oder mindestens kompatibel mit dem Werkstoff ist, die das andere oder zweite Bestandteil (4) bildet, anzubauen oder zu befestigen, und, schließlich die zwei Bestandteile (3 und 4) zu vereinen, nämlich das, das fest mit dem Wärmeaustauscher (2) verbunden ist, und das andere durch Nebeneinanderlegen und Zusammenfügen durch Schweißen im Bereich ihrer Ränder (3"', 4"') von Wänden (3', 4') in Berührung, wobei die Schicht (11') oder die Platte (11) aus Thermoplastmaterial, die auf dem Wärmeaustauscher (2) angebaut wird, unter Druck auf der Wand (4') des anderen oder zweiten Bestandteils (4) beim Zusammenfügen durch Schweißen zum Aufliegen kommt.

8. Verfahren nach Anspruch 7, **dadurch gekennzeichnet, dass** die Schicht (11') aus Thermoplastmaterial auf einem Teil oder einem Zubehörteil (12) des Wärmeaustauschers (2), zum Beispiel auf einer Platte oder einem Flansch dieses Letzteren, durch Abformen angebaut wird.

9. Verfahren nach Anspruch 8, **dadurch gekennzeichnet, dass** die Platte (11) aus Thermoplastmaterial auf einem Teil oder einem Zubehörteil (12) des Wärmeaustauschers (2), zum Beispiel auf einer Platte oder einem Flansch dieses Letzteren, durch mindestens eine Verbindung mit gegenseitigem Eingriff oder Einhängen, zum Beispiel über Einsätze (13) oder Nietstempel (13') angebaut wird.

10. Verfahren nach einem der Ansprüche 1 bis 9, **dadurch gekennzeichnet, dass** es darin besteht, um jede durchgehende Öffnung (10) der Wand (3') des betroffenen Bestandteils (3), die zum Durchgehen der Fluidanschlussansätze (2') des Wärmeaustauschers (2) bestimmt sind, eine Abdichtvorrichtung (14) zwischen den Seiten des Wärmeaustauschers (2) und der Wand (3') in gegenseitiger Berührung bereitzustellen.

11. Sammler oder Einlassverteiler (1), der mindestens einen Wärmeaustauscher (2) integriert, der in seinem Innenraum untergebracht ist, wobei der Sammler aus mindestens zwei Bestandteilen (3, 4) aus Thermoplastmaterial gebildet ist, jeder aus einem einzigen Stück und miteinander zusammengefügt, und wobei der Wärmeaustauscher (2) in dem Sammler (1) gehalten wird, indem er mit mindestens einem seiner Bestandteile (3, 4) verbunden ist,
Sammler oder Verteiler (1), bei dem der Wärmeaustauscher (2) starr und direkt mit mindestens einem der Bestandteile (3, 4) verbunden ist, wobei die Wand (3', 4') des Bestandteils (3 oder 4) eine Strukturkontinuität im Bereich der Verbindungsstelle(n) (3", 4") aufweist,
Sammler (1) **dadurch gekennzeichnet, dass** die starre feste Verbindung des Wärmeaustauschers (2) mit dem betroffenen Bestandteil (3 oder 4) des Sammlers (1) aus einer gegenseitigen Verschachtelung oder einem Einhängen eines Teils des Wärmeaustauschers (2) oder mindestens eines Zubehörteils dieses Letzteren (5, 6) mit dem Material, das die Wand (3', 4') des betroffenen Bestandteils (3 oder 4) bildet oder mindestens einem Ansatz (7) aus einem einzigen Stück dieser Wand, besteht, wobei der Teil oder das Zubehörteil (5, 6) in die Wand (3', 4') eingreift, ohne den oder die Ansätze (7), die in den Teil oder das Zubehör (5, 6) eingreifen, zu durchqueren,
wobei die Verbindung durch mechanischen Eingriff oder gegenseitiges Einhängen durch eine stellenweise Fusion und/oder Oberflächenfusion des Materials der Wand (3', 4') des betroffenen Bestandteils (3 oder 4) hergestellt ist.

12. Sammler nach Anspruch 11, **dadurch gekennzeichnet, dass** die feste Verbindung zwischen dem Wärmeaustauscher (2) und dem betroffenen Bestandteil (3 oder 4) aus einer mechanischen Verbindung über Einsatzteile (6) des Wärmeaustauschers (2) besteht, die in entsprechende Aufnahmestellen (8) der Wand des Bestandteils (3 oder 4) eingerastet sind, wobei eine eventuell stellenweise Fusion des Materials der Wand (3', 4') vorhanden sein kann.

13. Sammler nach einem der Ansprüche 11 und 12, **dadurch gekennzeichnet, dass** die starre feste Verbindung zwischen dem Wärmeaustauscher (2) und dem betroffenen Bestandteil (3 oder 4) aus einer Nietstempelverbindung besteht, die Nieten (7), die auf der Wand (3', 4') des Bestandteils (3 oder 4) mit dem Material dieser Letzteren geformt oder ausgebildet sind und in komplementäre Stellen (9) eines Teils oder eines Zubehörteils (5) des Wärmeaustauschers (2), wie zum Beispiel in einem Flansch oder einer perforierten Platte, eingreifen, wobei die freien Enden (7') der Nieten (7) verformt werden.

14. Sammler nach einem der Ansprüche 11 bis 13, **dadurch gekennzeichnet, dass** der Wärmeaustauscher (2) einen Teil oder ein Zubehörteil (5), wie zum Beispiel einen Flansch oder eine Platte aufweist, die mindestens teilweise in das Material der Wand (3', 4') des Bestandteils (3 oder 4) zum Beispiel durch Abformen integriert ist.

15. Sammler nach einem der Ansprüche 11 bis 14, **dadurch gekennzeichnet, dass** der Wärmeaustauscher (2) nur mit einem einzigen Bestandteil (3 oder 4) des Sammlers (1) derart fest verbunden ist, dass er in diesem Letzteren hängt, wobei das betroffene Bestandteil (3) entweder dasjenige ist, das Öffnungen (10) für das Durchgehen der Fluidanschlussansätze (2') des Wärmeaustauschers (2) aufweist, oder das komplementäre Bestandteil (4) ist.

16. Sammler nach einem der Ansprüche 11 bis 15, **dadurch gekennzeichnet, dass** der Wärmeaustauscher (2) starr fest mit zwei oder den zwei Bestandteilen (3, 4) des Sammlers (1) in dem Bereich von zwei einander gegenüber liegenden Seiten der Teile (3, 4) verbunden ist, indem eine interne Strukturverstärkung für den Sammler (1) gebildet wird.

17. Sammler nach Anspruch 16, **dadurch gekennzeichnet, dass** die zweite starre Verbindung eine Schicht (11') oder eine Platte (11) aus Thermoplastmaterial aufweist, die auf einem Teil oder einem Zubehörteil (12) des Wärmeaustauschers (2), wie zum Beispiel auf einem Flansch oder einer Platte, angebaut oder befestigt und fest durch Schweißen mit der Wand (4') des anderen oder des zweiten Bestandteils (4) des Sammlers (1) verbunden ist.

18. Sammler nach Anspruch 17, **dadurch gekennzeichnet, dass** die Schicht (11'), die an den Wärmeaustauscher (2) angebaut ist, eine auf einer Platte oder einem Flansch (12) dieses Letzteren, eventuell mit perforierter Struktur, abgeformte Schicht ist.

19. Sammler nach Anspruch 17, **dadurch gekennzeichnet, dass** die auf den Wärmeaustauscher (2) angebaute Platte (11) auf dem Wärmeaustauscher (2) oder einem Zubehörteil (12) dieses Letzteren, wie zum Beispiel auf einem Flansch oder einer Platte, über Einsätze (13) oder Nietstempel (13') befestigt ist.

20. Sammler nach einem der Ansprüche 16 bis 19, **dadurch gekennzeichnet, dass** der Wärmeaustauscher (2) den Innenraum des Sammlers (1) in zwei Teile teilt, indem gegebenenfalls eine umfängliche Abdichtung zwischen der Wand (3', 4') dieses Letzteren und der Außenkontur des Wärmeaustauschers (2) hergestellt wird.

21. Sammler nach einem der Ansprüche 11 bis 20, **dadurch gekennzeichnet, dass** er anhand des Herstellungsverfahrens nach einem der Ansprüche 1 bis 10 erzielt wird.

## Claims

1. Method for producing an intake or distribution manifold (1), preferably made from a thermoplastic material, integrating at least one heat exchanger (2) mounted in its internal volume so as to obtain a unitary structural module, said intake manifold (1) being formed by the assembly of at least two constituent parts (3, 4) preferably each as a single part and preferably in the form of hollow shells, and said exchanger (2) being connected for the purpose of its connection to at least one of its two constituent parts (3, 4),
said method consisting of providing said constituent parts (3, 4), then assembling them to form said intake manifold (1) and mounting said at least one heat exchanger (2),
said method also consisting, prior to the assembly operation, of joining rigidly and directly the exchanger (2) to one (3 or 4) of said constituent parts (3, 4) made of thermoplastic material, while maintaining the continuity of the wall (3', 4') of said constituent part, in particular at the joining site or sites (3", 4"), then assembling said constituent part (3, 4) equipped with the exchanger (2), preferably by welding with the other or another constituent part (4 or 3) of said intake manifold (1),
the method being **characterised in that** the rigid connection of the exchanger (2) with the constituent part concerned (3 or 4) of the intake manifold (1) is performed by an interlocking or mutual attachment of part of the exchanger or at least an attachment of the latter (5, 6) with the material forming the wall (3', 4') of the constituent part concerned (3 or 4) or at least an additional part (7) in a single piece of said wall, the part or attachment (5, 6) engaging in the wall (3', 4') without traversing the latter or the additional part (7) engaging in the part or the attachment (5, 6),
said connection by mechanical engagement or mutual locking between the exchanger (2) and the wall (3', 4') of the constituent part concerned (3, 4) being performed or at least locked by a thermal treatment or an operation of a thermal nature, of at least one part of the material forming said wall (3', 4').

2. Method according to claim 1, **characterised in that** the joining of the exchanger (2) with the constituent part (3, 4) of the intake manifold (1) is performed during the manufacture of said constituent wall (3 or 4) by moulding over a part or an attachment (5) of the exchanger (2), for example a flange, a collar or a plate, if necessary perforated, by the material forming said constituent part (3 or 4), said part or attachment (5) of the exchanger (2) being thus at least partially integrated into said constituent wall (3 or 4).

3. Method according to any one of claims 1 and 2, **characterised in that** the joining of the exchanger (2) with the constituent part concerned (3 or 4) of the intake manifold (1) is performed by fitting, if necessary by force, at least one insert part (6) formed or attached onto the exchanger (2), and if necessary preheated, into at least one corresponding receiving site (8) arranged in the wall (3', 4') of the constituent part concerned (3 or 4).

4. Method according to any one of claims 1 and 2, **characterised in that** the joining of the exchanger (2) to the constituent part concerned (3 or 4) of the intake manifold (1) is performed by rivet snaps, additional parts (7) in the form of rivets or the like being moulded or shaped on the wall (3', 4') of said constituent part (3 or 4), then engaged in complementary sites (9) of a part or an attachment (5) of the exchanger (2), for example a flange or a plate, during the assembly of the latter with said constituent part (3 or 4) and lastly deformed at their free ends (7'), preferably by the application of heat to lock the joining connection.

5. Method according to any one of claims 1 to 4, **characterised in that** the exchanger (2) is only joined to a single constituent part (3 or 4) of the intake manifold (1) so as to be suspended in the latter, the constituent part concerned (3) being either the one comprising openings (10) for the passage of fluid connecting end pieces (2') of the exchanger (2) or the complementary constituent part (4).

6. Method according to any one of claims 1 to 4, **characterised in that** the exchanger (2) is connected to two constituent parts (3 and 4) of the intake manifold (1), the second connection being performed during the assembly of the constituent parts concerned (3 and 4).

7. Method according to claim 6, **characterised in that** it consists, prior to the assembly operation of the two constituent parts concerned (3 and 4), of attaching or fixing onto a face of the exchanger (2), opposite its face in contact with the constituent part (3) of the intake manifold (1) joined prior to assembly, a plate (11) or a layer (11') of thermoplastic material, that is identical or at least compatible with the material forming the other or the second constituent part (4) and, lastly joining the two constituent parts (3 and 4), namely the one joined to the exchanger (2) and the other by juxtaposition and assembly by welding at their edges (3"', 4"') of walls (3', 4') in contact, the layer (11') or the plate (11) of thermoplastic material attached onto the exchanger (2) bearing under pressure on the wall (4') of the other or the second constituent part (4) during assembly by welding.

8. Method according to claim 7, **characterised in that** the layer (11') of thermoplastic material is attached onto a part or an attachment (12) of the exchanger (2), for example a plate or flange of the latter, by moulding.

9. Method according to claim 8, **characterised in that** the plate (11) of thermoplastic material is attached onto a part or an attachment (12) of the exchanger (2), for example a plate or flange of the latter, by at least one connection with mutual engagement or attachment, for example by means of inserts (13) or rivet snaps (13').

10. Method according to any one of claims 1 to 9, **characterised in that** it consists of providing, around each traversing opening (10) of the wall (3') of the constituent part concerned (3) designed for the passage of fluid connecting end pieces (2') of the exchanger (2), a sealing device (14) between the faces of the exchanger (2) and the wall (3') in mutual contact.

11. Intake or distribution manifold (1) integrating at least one heat exchanger (2) accommodated in its inner volume, said intake manifold being formed by at least two constituent parts (3, 4) from a thermoplastic material, each as a single part and assembled together, and said exchanger (2) being maintained in said intake manifold (1) by being connected to at least one of its two constituent parts (3, 4),
intake or distribution manifold (1) in which the exchanger (2) is joined rigidly and directly to at least one of the said constituent parts (3, 4), the wall (3', 4') of said constituent part (3 or 4) having a structural continuity at the connecting site or sites (3", 4"),
the intake manifold (1) being **characterised in that** the rigid connection of the exchanger (2) with the constituent part concerned (3 or 4) of the intake (1) consists of an interlocking or mutual attachment of part of the exchanger (2) or at least an attachment of the latter (5, 6) with the material forming the wall (3', 4') of the constituent part concerned (3 or 4) or at least an additional part (7) in a single piece of said wall, the part or attachment (5, 6) engaging in the wall (3', 4') without traversing it or the additional part (7) engaging in the part or the attachment (5, 6),
the connection by mechanical engagement or mutual locking being achieved, or at least locked by localised and/or surface fusion of the material of the wall (3', 4') of the constituent part concerned (3 or 4).

12. Intake manifold according to claim 11, **characterised in that** the joining connection between the exchanger (2) and constituent part (3 or 4) concerned consists of a mechanical connection by means of insert parts (6) of the exchanger (2) fitted into corresponding receiving sites (8) of the wall of said constituent part (3 or 4), whereby there may a possible localised fusion of the material of the wall (3' 4').

13. Intake manifold according to any one of claims 11 and 12, **characterised in that** the rigid joining connection between the exchanger (2) and the constituent part concerned (3 or 4) consists of a rivet snap connection, using moulded or shaped rivet snaps (7) on the wall (3', 4') of said constituent part (3 or 4), with the material of the latter and engaged with the complementary sites (9) of a part or an attachment (5) of the exchanger (2), such as a flange or a perforated plate, the free ends (7') of said rivet snaps (7) being deformed.

14. Intake manifold according to any one of claims 11 to 13, **characterised in that** the exchanger (2) comprises a part or an attachment (5), such as a flange or a plate, integrated at least partially into the material of the wall (3', 4') of said constituent part (3 or 4), for example by moulding.

15. Intake manifold according to any one of claims 11 to 14, **characterised in that** the exchanger (2) is only connected to a single constituent part (3 or 4) of the intake manifold (1) so as to be suspended in the latter, the constituent part concerned (3) being either the one comprising openings (10) for the passage of end pieces (2') for the fluid connection of the exchanger (2), or the complementary constituent part (4).

16. Intake manifold according to any one of claims 11 to 15, **characterised in that** the exchanger (2) is connected rigidly by two constituent parts (3, 4) of the intake manifold (1) on two mutually opposite faces of said parts (3, 4), thus forming an internal structural reinforcement for said intake manifold (1).

17. Intake manifold according to claim 16, **characterised in that** the second rigid joining connection comprises a layer (11') or a plate (11) made of thermoplastic material that is attached or fixed onto a part or an attachment (12) of the exchanger (2), such as a flange or a plate, and joined by welding to the wall (4') of the other or the second constituent part (4) of the intake manifold (1).

18. Intake manifold according to claim 17, **characterised in that** the layer (11') attached onto the exchanger (2) is a layer that is moulded onto a plate or flange (12) of the latter, possibly with a perforated structure.

19. Intake manifold according to claim 17, **characterised in that** the plate (11) attached onto the exchanger (2) is fixed onto the exchanger (2) or an attachment (12) of the latter, such as a flange or a plate, by means of inserts (13) or rivet snaps (13').

20. Intake manifold according to any one of claims 16 to 19, **characterised in that** the exchanger (2) divides the internal volume of the intake manifold (1) into two parts, if necessary by forming a peripheral seal between the wall (3', 4') of the latter and the external contour of said exchanger (2).

21. Intake manifold according to any one of claims 11 to 20, **characterised in that** it is obtained by means of a method of production according to any one of claims 1 to 10.
